Europäisches Patentamt

European Patent Office

Office européen des brevets

(11) Numéro de publication: **0 388 570**
**A1**

# (12) DEMANDE DE BREVET EUROPEEN

(21) Numéro de dépôt: 89440023.3

(51) Int. Cl.⁵: **F16B 2/16**

(22) Date de dépôt: **22.03.89**

Revendications modifiées conformément à la règle 86 (2) CBE.

(43) Date de publication de la demande:
**26.09.90 Bulletin 90/39**

(84) Etats contractants désignés:
**AT BE CH DE ES FR GB GR IT LI LU NL SE**

(71) Demandeur: **Green, John**
**7 Avenue de Grande-Bretagne**
**Monte Carlo(MC)**

(72) Inventeur: **Green, John**
**7 Avenue de Grande-Bretagne**
**Monte Carlo(MC)**

(74) Mandataire: **Bossard, Jacques-René**
**Cabinet MEYER & COURTASSOL Bureau**
**EUROPE 20 Place des Halles**
**F-67000 Strasbourg(FR)**

(54) **Dispositif d'auto-serrage.**

(57) Dispositif de blocage par auto-serrage destiné à le solidariser temporairement avec un matériau (F) de forme quelconque, sans endommager ce matériau, et avec une force proportionnelle au poids dudit matériau et/ou à toute action de traction exercée sur ce matériau, ce dispositif étant caractérisé en ce qu'il se compose d'un boîtier (3) présentant dans sa base un orifice d'entrée (6) pour ledit matériau, et comportant deux parois latérales (7, 8) divergeant vers le haut depuis cet orifice, et au moins un rouleau (1) monté rotatif et coulissant le long de la première de ces parois, et soumis à une force dirigée vers le bas, dans la direction dudit orifice et de la seconde paroi, ledit rouleau étant, quand ledit matériau est introduit dans ledit orifice, repoussé vers le haut en s'éloignant de ladite seconde paroi, toute action de traction exercée sur ledit matériau ayant pour effet d'attirer ledit rouleau vers le bas et vers ladite seconde paroi en exerçant un effet de coin, avec pour conséquence de maintenir ledit matériau d'autant plus fortement serré par le rouleau que ladite action de traction est plus intense.

Fig. 1

# DISPOSITIF D'AUTO-SERRAGE

La présente invention concerne un nouveau dispositif destiné à immobiliser des produits ou matériaux généralement, mais non exclusivement, en feuilles ou plaques, souples ou rigides, de toutes dimensions et de toutes natures, quelles que soient les efforts et contraintes subis par ces matériaux. Pour la commodité de la description, on se référera tout d'abord à des matériaux plats, mais on donnera par la suite des exemples d'applications à des produits non-plats, pour démontrer le caractère très général de l'invention.

On connait déjà de nombreux dispositifs destinés à ce genre d'usage, le plus typique étant du genre "pince à linge", comprenant deux éléments pincés l'un contre l'autre sous l'action d'un ressort de rappel. Ces dispositifs sont largement utilisés, non seulement comme organe de suspension de linge à une corde, mais encore comme "clip" servant par exemple à réunir des documents, ou à maintenir par exemple une nappe sur une table de plein air.

L'inconvénient commun à tous ces dispositifs est inhérent à leur construction : dès lors que la pince est soumise à un ressort, la force de pincement qu'elle exerce est naturellement constante. Or si une telle force constante est satisfaisante en conditions normales d'utilisation, elle peut devenir insuffisante à un moment donné, par exemple en cas de coup de vent soudain et violent. Si l'on veut prévenir cette circonstance, on doit utiliser un ressort plus fort, et dont l'action est excessive en conditions normales.

Au surplus, une pince classique de ce genre n'est généralement appropriée que pour un intervalle d'épaisseurs relativement limité du matériau en feuille. Au delà d'une certaine épaisseur, le ressort est soumis à une trop grande traction et n'exerce plus son effet. Par ailleurs, une fois en place, une telle pince ne peut plus recevoir un élément additionnel à pincer sans que l'on ait le risque de voir les éléments déjà en place s'éparpiller.

Enfin, de telles pinces ont des dimensions généralement limitées, ce qui en limite également le domaine d'applications.

Ainsi, la manutention des plaques de matériau relativement lourds et/ou de relativement grandes dimensions, par exemple des panneaux de construction, fait actuellement appel à un matériel de levage comportant des grappins venant s'accrocher à ces plaques en risquant de les endommager.

Pour éliminer ces inconvénients, l'invention vise un dispositif de pincement ayant la capacité de pincer un matériau en feuille, en plaque ou de toute autre structure géométrique, y compris arrondie, avec une force d'autant plus grande que ledit matériau sera soumis à un effort d'arrachement. Dans le cas particulier de la manutention de matériau en plaques, ce dispositif peut recevoir indifféremment des épaisseurs très variables de ce matériau, soit en une seule fois, soit progressivement, sans dispersion des plaques déjà pincées.

Dans le cas particulier, évoqué ci-dessus, de la manutention de plaques lourdes et de grandes dimensions telles que des panneaux de construction préfabriqués, des dalles de béton ou des tôles d'acier, le dispositif selon l'invention, adapté en dimensions et éventuellement en forme, peut rendre de très grands services, en facilitant cette manutention sans endommager ces plaques par des crochets ou grappins.

Par ailleurs, comme évoqué ci-dessus, le dispositif selon l'invention peut trouver des applications dans des domaines très différents, où le matériau à pincer n'est pas nécessairement plan, mais peut même être arrondi, par exemple la manutention de bouteilles. Enfin on verra ci-après qu'une application très utile de l'invention consiste à utiliser le même principe pour l'accrochage de bijoux notamment de boucles d'oreilles.

Pour atteindre les buts visés ci-dessus ainsi que d'autres, l'invention vise un dispositif de blocage par serrage destiné à le solidariser temporairement avec un matériau de forme quelconque, sans endommager ce matériau, et avec une force proportionnelle au poids dudit matériau et/ou à toute action de traction exercée sur ce matériau, ce dispositif étant caractérisé en ce qu'il se compose d'un boîtier présentant dans sa base un orifice d'entrée pour ledit matériau, et comportant deux parois latérales divergeant vers le haut depuis cet orifice, et au moins un rouleau monté rotatif et coulissant le long de la première de ces parois, et soumis à une force positive dirigée vers le bas, dans la direction dudit orifice et de la seconde paroi, ledit rouleau étant, quand ledit matériau est introduit dans ledit orifice, repoussé vers le haut en s'éloignant de ladite seconde paroi, toute action de traction exercée sur ledit matériau ayant pour effet d'attirer ledit rouleau vers le bas et vers ladite seconde paroi en exerçant un effet de coin, avec pour conséquence de maintenir ledit matériau d'autant plus fortement serré par le rouleau contre ladite seconde paroi que ladite action de traction est plus intense.

Selon un premier mode de réalisation de l'invention, le dispositif comporte un rouleau unique, l'effet de blocage du matériau résultant de son serrage par ce rouleau contre une des parois du boîtier. Ce mode de réalisation est le plus simple et le moins coûteux et convient à la plupart des applications.

Selon un second mode de réalisation, le dispositif selon l'invention se compose essentiellement de deux rouleaux, de préférence mais non nécessairement moletés, montés rotatifs et coulissants dans un boîtier possédant deux parois obliques convergeant vers un fond ouvert, ces rouleaux étant normalement rappelés positivement vers le fond où ils sont tangents l'un à l'autre, et étant écartés l'un de d'autre quand un matériau en feuille ou plaque est inséré entre eux vers le haut, toute action de traction exercée ensuite sur ce matériau ayant pour effet de ramener lesdits rouleaux vers le bas et l'un vers l'autre, en exerçant un effet de coin en suivant la pente des parois obliques du boîtier, de telle sorte que ledit matériau est maintenu pincé entre lesdits rouleaux avec une force d'autant plus élevée que la traction à laquelle il est soumis est plus importante.

Pour relâcher cette action de pincement, il faut et suffit de tirer le ou les rouleaux vers le haut par tout moyen approprié, de sorte que, glissant le long des parois obliques du boîtier, lesdits rouleaux s'écartent l'un de l'autre, ou de la paroi leur faisant face.

Il faut noter que des dispositifs partiellement similaires ont été proposés comme pinces pour maintenir des feuilles de papier, au titre d'article de bureau. Cependant ces dispositifs ne comprenaient qu'un seul rouleau, attiré vers le bas par son propre poids et ne comportant aucun moyen de dégagement. Par suite, d'une part son action était de force très limitée et dirigée uniquement verticalement vers le bas, ce qui limitait donc l'application de ce dispositif vers le bas, par exemple placées contre un mur. Au surplus il n'existait pas de moyen d'extraire ces matériaux par relâchage de l'effet de pincement, puisque l'on ne pouvait pas soulever le rouleau vers le haut.

Pour éviter ces limitations et ces inconvénients, selon une caractéristique essentielle de l'invention, les rouleaux sont de préférence repoussés vers le bas par un élément élastique, par exemple un ressort enfilé sur une tige portant le rouleau à son extrémité inférieure et équipée à son extrémité supérieure à un organe permettant de soulever le rouleau. Dans le cas de la réalisation comportant deux rouleaux, ils sont montés sur les deux branches divergentes d'une fourche métallique et de préférence repoussés vers le bas par deux ressorts de compression enfilés sur ces branches, lesdites branches exerçant en même temps une action d'écartement des rouleaux vers les parois obliques du boîtier, et la partie supérieure de la fourche présentant un anneau de traction.

Comme exposé ci-dessus, le domaine d'application d'un tel dispositif est extrêmement vaste :

A titre d'exemple non limitatif, ce dispositif peut être utilisé à la place des pinces à linges classiques pour accrocher des articles à sécher à un fil, sans courir le risque de voir s'envoler ces articles sous l'effet d'un coup de vent.

Un autre exemple est celui du maintien de documents ensemble ; le dispositif selon l'invention présente l'avantage de rendre possible l'addition de nouveaux documents à une pile ou liasse déjà existante, sans risquer de perturber cette liasse, et en conservant un moyen disponible pour l'addition d'autres documents encore.

Un autre exemple encore est celui de la manutention de matériaux en plaques plus ou moins épaisses, les dimensions et la forme du dispositif étant adaptées à celles de ces plaques, notamment dans le domaine des matériaux de construction, par exemple des dalles, des panneaux préfabriqués et analogues.

Comme autre exemple d'application encore, on peut indiquer que le dispositif selon l'invention peut être utilisé comme système anti-retour dans des installations faisant intervenir le déroulement ou le défilement de matériaux en ruban, en bande ou analogues, par exemple de bande magnétique dans un magnétophone ou un magnétoscope, ou de câbles dans des systèmes de traction ou de remorquage.

Comme autres exemples d'applications, on peut citer les systèmes de traction des véhicules et des bateaux, où le dispositif remplace avantageusement les crochets usuels ; on peut également citer l'application du dispositif pour la suspension de journaux, magazines, disques, tableaux et analogues, où il peut jouer le rôle d'anti-vol, le système de déblocage étant rendu inaccessible au public.

Enfin, on notera que l'on peut bloquer entre les deux rouleaux des matériaux non plans ; à titre d'exemple, on peut emprisonner entre deux rouleaux parallèles présentés horizontalement des cols de bouteilles présentées verticalement, de sorte que le dispositif selon l'invention constitue un nouveau système de manutention de bouteilles, notamment pour le chargement et le déchargement de containers ; dans le même ordre d'idées, il peut constituer un système de manutention de tubes et tuyaux de toutes dimensions, par exemple pour charger et décharger simultanément des séries de tubes d'essais dans les laboratoires.

Parmi les extensions de ces applications, on peut également citer l'utilisation du dispositif selon l'invention pour l'accrochage de bijoux, notamment des boucles d'oreilles sur les lobes des oreilles, sans risquer ni de blesser l'oreille ni de perdre les boucles. Dans cette application, le boîtier du dispositif peut s'ouvrir pour faciliter la mise en place de la boucle par dessus la partie plus épaisse du lobe.

Bien d'autres applications de ce dispositif apparaîtront à l'occasion de la description suivante des exemples de réalisation typiques, correspondant au dessin annexé, sur lequel :

- La figure 1 est une vue schématique en perspective du mode de réalisation à deux rouleaux du dispositif selon l'invention, le boîtier étant supposé "transparent" ;

- La figure 2 est une coupe verticale par le plan médian du dispositif, ce dernier étant vide ;

- La figure 3 est une vue analogue à la figure 2, un matériau en feuille étant pincé par le dispositif, et

- La figure 4 est une coupe verticale par le plan IV-IV de la figure 2.

- La figure 5 est une coupe analogue à la figure 2 d'un mode de réalisation à un seul rouleau du dispositif selon l'invention, et

- La figure 6 est une coupe analogue à la figure 2 d'un mode de réalisation à un seul rouleau, aménagé en vue de l'application à une boucle d'oreille.

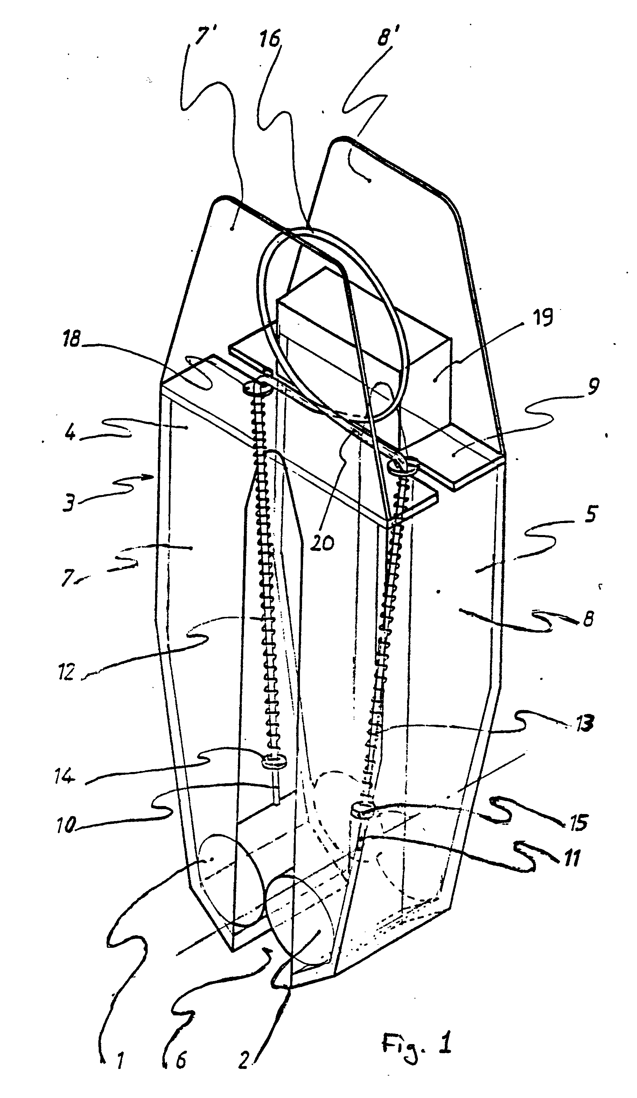

Si l'on se réfère tout d'abord aux figures 1 à 4, le dispositif selon l'invention se compose essentiellement d'un couple de rouleaux parallèles 1 et 2, montés dans un boîtier 3 possédant deux parties latérales 4 et 5, obliques et convergeant vers le bas pour former une fenêtre ouverte 6. Le boîtier 3 est fermé à l'avant et à l'arrière par deux parois 7 et 8, et à la partie supérieure par un couvercle 9, d'où dépassent le haut 7′ et 8′ des parois 7 et 8, en vue de permettre la fixation du dispositif à tout support, par tout moyen approprié (non représenté).

Chaque rouleau 1 et 2 est monté à l'extrémité de l'une des branches 10 et 11 d'une fourche en fil métallique, ces branches étant normalement divergentes, et maintenues constamment resserrées par l'appui des rouleaux 1 et 2 contre les parois obliques 4 et 5. Sur chaque branche 10 et 11 est monté un ressort de compression 12 et 13 prenant appui à son extrémité inférieure sur une butée 14 et 15 solidaire de la branche respective, et à sa partie supérieure sur la face inférieure du couvercle 9. L'élasticité de la fourche 10-11 est assurée par une boucle supérieure 16, dont une autre fonction sera expliquée ci-après, et qui est située au-dessus du couvercle 9, les branches 10 et 11 traversant des fenêtres 17 et 18 dudit couvercle.

Le dispositif se trouvant ainsi décrit, son fonctionnement est le suivant :

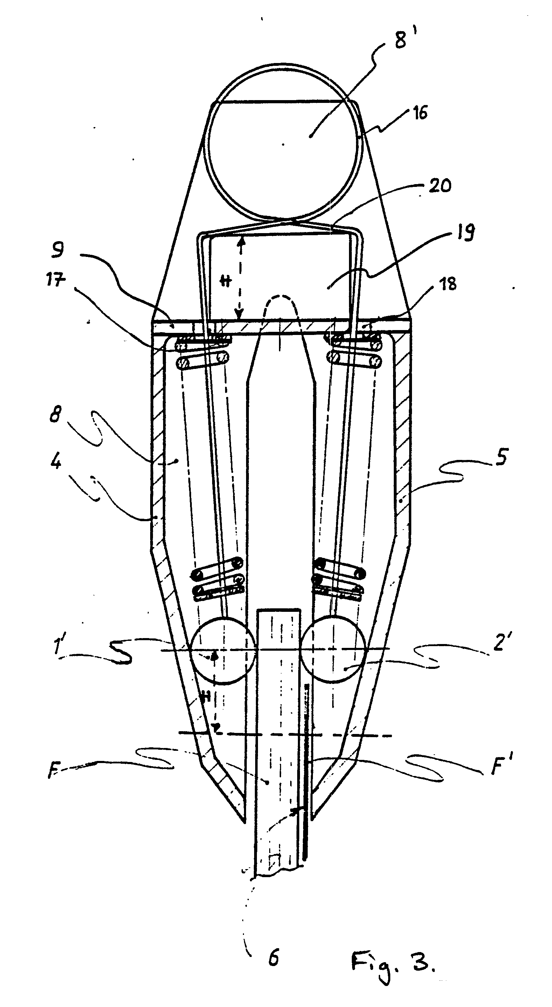

Si l'on introduit par la fenêtre 6 un matériau en feuille F, ce dernier va repousser les rouleaux 1 et 2 jusqu'à ce qu'ils soient suffisamment écartés en 1′ et 2′ pour permettre son passage (voir figure 3).

L'ensemble de l'équipage rouleaux 1-2/fourche 10-11/ressorts 12-13/anneau 16 est donc repoussé vers le haut, en comprimant les ressorts 12-13, tandis que les branches 10-11 maintiennent les rouleaux 1-2 contre les parois 4-5.

Si l'on exerce maintenant une traction sur le matériau F, cet ensemble va se trouver tiré vers le bas. Dans ces conditions, les rouleaux 1-2 vont se trouver repoussés l'un vers l'autre par l'effet de coin exercé par les parois 4-5, de sorte qu'ils exerceront sur le matériau F une action de pincement, d'autant plus intense que, la traction étant plus élevée, les rouleaux seront plus rapprochés.

Le dispositif exerce donc bien une action de maintien d'autant plus solide que le matériau F subira des efforts plus importants. C'est cette action proportionnelle qui représente l'intérêt majeur de l'invention.

Si l'on veut insérer une épaisseur additionnelle F' de matériau en feuille dans la mesure où la largeur de la fenêtre 6 le permet, cette épaisseur viendra s'insérer entre les rouleaux 1′-2′ suivant le même processus, sans que l'épaisseur précédent F soit perturbée.

A l'inverse, pour libérer le matériau F, il suffit d'exercer une traction sur l'anneau 16: L'équipage précité sera soulevé vers le haut, et sous l'action d'écartement des branches 10-11, les rouleaux 1′-2′, roulant sur les parois divergentes 4-5 vont s'écarter l'un de l'autre, ce qui annule l'effet de pincement.

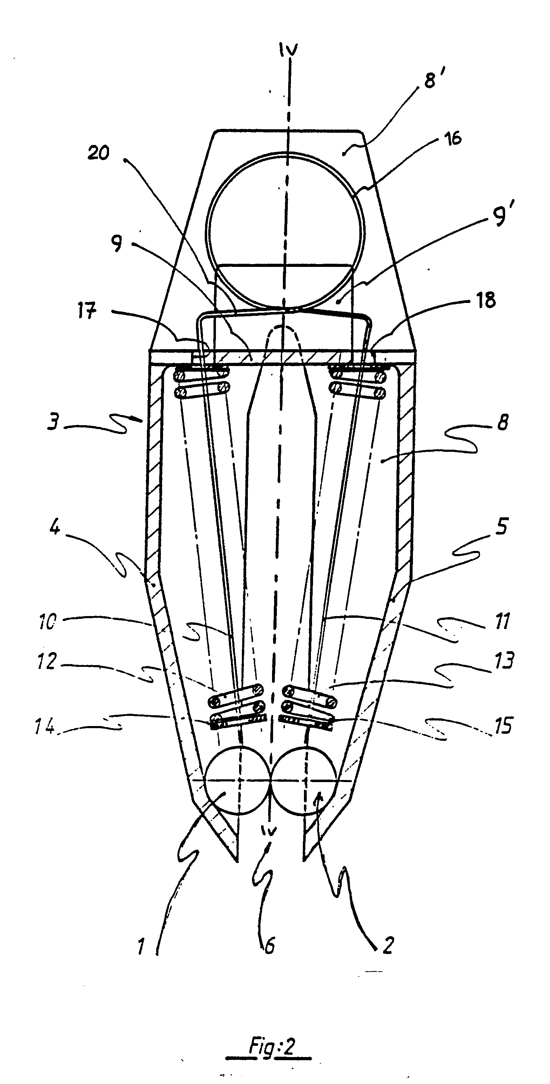

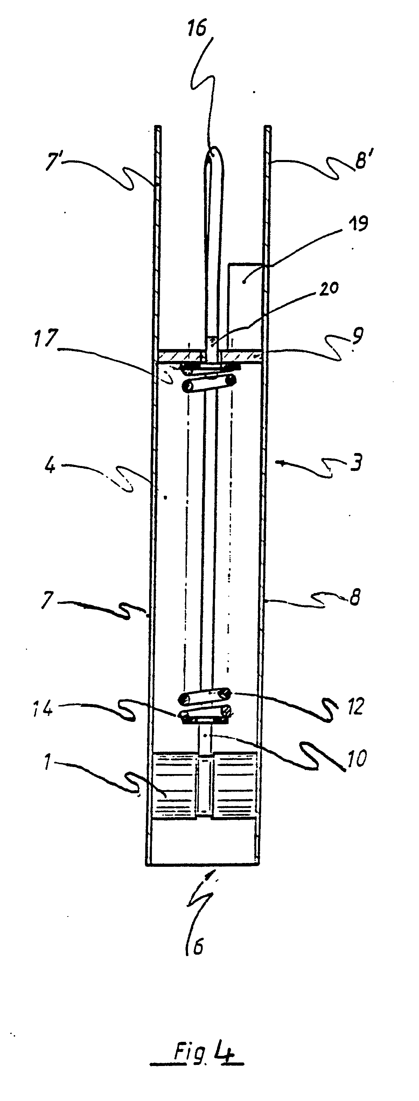

Pour faciliter l'insertion du matériau F, en maintenant écartés l'un de l'autre les rouleaux 1-2, il est prévu à hauteur du couvercle 9 une cale 17 d'une hauteur H du même ordre de grandeur que le déplacement vertical des rouleaux entre leurs positions des figures 2 et 4. En déplaçant latéralement la branche horizontale 20 de la fourche 10-11, cette branche vient s'accrocher sur le dessus de cette cale, en empêchant l'équipage 1-2-10-11 de redescendre sous l'effet des ressorts 12-13.

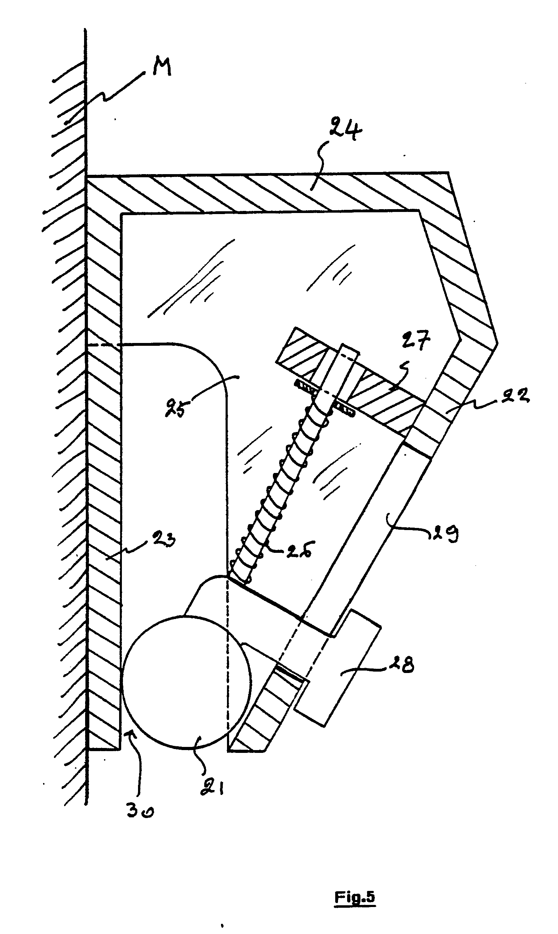

Si l'on se réfère maintenant à la figure 5, on y a représenté un dispositif semblable au précédent, mais ne comportant qu'un seul rouleau.

Dans cette réalisation, le rouleau unique 21 est monté rotatif et coulissant le long de la paroi oblique 22 d'un boîtier fermé par une paroi verticale 23, un couvercle 24 et des joues latérales 25. Ce rouleau est repoussé vers le bas par un ressort 26 prenant appui sur une patte 27 solidaire du boîtier et un doigt 28 solidaire du rouleau et pouvant être déplacé depuis l'extérieur le long d'une fente allongée 29 de la paroi 22.

Dans cette réalisation, tout objet introduit dans la fenêtre 30 du boîtier repoussera vers le haut le rouleau 21 en opposition au ressort 26, puis, toute traction sur cet objet déterminera, le long de la paroi 23, la descente du rouleau qui viendra coincer l'objet contre la paroi 23.

Ainsi par exemple, ce dispositif pourra être collé le long d'un mur M et servir de porte serviettes. Pour libérer la serviette, il faut simplement repousser le doigt 28 vers le haut, ce qui soulève le rouleau.

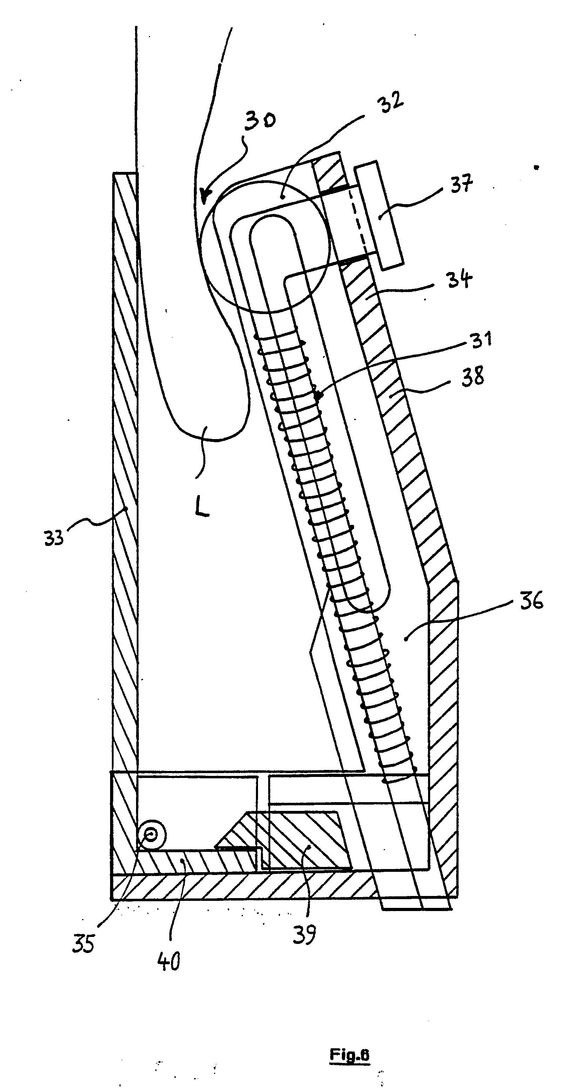

Dans l'application illustrée à la figure 6, le dispositif est utilisé avec l'orifice 30 du boîtier situé en haut, ce qui impose bien entendu un ressort 31 pour repousser le rouleau 32 vers cet orifice et vers la paroi verticale 33 le long de la paroi oblique 34.

Ce dispositif fonctionne bien entendu de la même façon que celui de la figure 5, mais comporte un aménagement supplémentaire, du fait que le boîtier est destiné à supporter une boucle d'oreille : du fait que le lobe L de l'oreille présente généralement un bourrelet plus épais que l'orifice 30, il est prévu des moyens pour permettre l'ouverture temporaire dudit boîtier, au moment de sa mise en place. Dans l'exemple représenté, ces moyens consistent en un axe 35 autour duquel le demi-boîtier 36 peut pivoter par rapport à la plaque 33. Par manoeuvre du bouton 37 à travers la fente allongée 38 pratiquée dans la paroi 34, on détermine à la fois le recul du rouleau 32 et le déverrouillage d'un loquet 39 coopérant avec un rebord 40 de la paroi 33. On peut alors ouvrir le boîtier et le mettre en place sur le lobe L. En refermant le boîtier, le loquet vient de lui même le verrouiller. Le rôle du rouleau 32 est ensuite le même sur le lobe de l'oreille en le comprimant contre la paroi 33, sans le blesser, mais en prévenant tout détachage intempestif de la boucle.

Bien entendu, de nombreux aménagements et variantes pourront être apportés à ces exemples de réalisation.

Ainsi, selon l'application envisagée, ce dispositif pourra être réalisé par simple moulage de matière plastique ou en d'autres matériaux, par exemple en métal. Par ailleurs, les rouleaux pourraient avantageusement être munis d'aspérités, par exemple moletés, pour améliorer la prise du dispositif. Les dimensions du dispositif seront adaptées à leur usage. La largeur de la fenêtre 6 et de l'échancrure pratiquée dans les parois 7 et 8 pour le passage des produits à manutentionner sera bien entendu adaptée à l'épaisseur de ces plaques.

En particulier, la largeur de cette fenêtre pourra être réglable, comme c'est le cas de l'ouverture 30 de la figure 6, soit par pivotement de deux moitiés du boîtier, comme c'est le cas du pivotement autour de l'axe 35 des deux demi-boîtiers 33 et 34 de la figure 6, soit par écartement temporaire de deux moitiés demeurant parallèles l'une à l'autre (non représenté).

**Revendications**

1. Dispositif de blocage par auto-serrage destiné à le solidariser temporairement avec un matériau de forme quelconque, sans endommager ce matériau, et avec une force proportionnelle au poids dudit matériau et/ou à toute action de traction exercée sur ce matériau, ce dispositif étant caractérisé en ce qu'il se compose d'un boîtier présentant dans sa base un orifice d'entrée pour ledit matériau, et comportant deux parois latérales divergeant vers le haut depuis cet orifice, et au moins un rouleau monté rotatif et coulissant le long de la première de ces parois, et soumis à une force dirigée vers le bas, dans la direction dudit orifice et de la seconde paroi, ledit rouleau étant, quand ledit matériau est introduit dans ledit orifice, repoussé vers le haut en s'éloignant de ladite seconde paroi, toute action de traction exercée sur ledit matériau ayant pour effet d'attirer ledit rouleau vers le bas et vers ladite seconde paroi en exerçant un effet de coin, avec pour conséquence de maintenir ledit matériau d'autant plus fortement serré par le rouleau que ladite action de traction est plus intense.

2. Dispositif selon la revendication 1, caractérisé en ce qu'il comporte un rouleau unique, l'effet de blocage du matériau résultant de son serrage par ce rouleau contre une des parois du boîtier.

3. Dispositif selon la revendication 1, caractérisé en ce qu'il se compose d'un couple de rouleaux parallèles, montés rotatifs et coulissants dans un boîtier possédant deux parois obliques convergeant vers le bas pour former une fenêtre d'introduction, ces rouleaux étant normalement rappelés vers le bas, où ils sont en contact tangentiels à hauteur de ladite fenêtre, l'insertion vers le haut dudit matériau par ladite fenêtre déterminant un déplacement vers le haut desdits rouleaux et leur écartement l'un de l'autre par ledit matériau, puis toute traction vers le bas dudit matériau ayant pour effet de ramener lesdits rouleaux vers le bas et l'un vers l'autre en exerçant sur ledit matériau un pincement par effet de coin d'autant plus intense que ladite traction est élevée.

4. Dispositif selon l'une quelconque des revendications 1 à 3, caractérisé en ce que la force rappelant les rouleaux vers le bas est un organe élastique, tel qu'un ressort.

5. Dispositif selon les revendications 1 à 4, caractérisé en ce que lesdits rouleaux sont montés sur les deux branches divergentes d'une fourche métallique et repoussées vers le bas par deux ressorts de compression enfilés sur ces branches, lesdites branches exerçant en même temps une action d'écartement des rouleaux vers les parois obliques du boîtier.

6. Dispositif selon la revendication 5, caractérisé en ce que l'élasticité des branches de ladite fourche métallique est obtenue par enroulement en anneau de leurs extrémités supérieures, une traction vers le haut sur cet anneau relâchant l'action de pincement des rouleaux.

7. Dispositif selon la revendication 6, caractérisé en ce que le couvercle du boîtier comporte une cale destinée à l'accrochage dudit anneau en position ouverte des rouleaux.

8. Dispositif selon l'une quelconque des revendications 1 à 6, caractérisé en ce que le boîtier est réalisé en deux moitiés articulées de manière à pouvoir s'ouvrir temporairement, un loquet les verrouillant en position fermée.

9. Dispositif selon la revendication 4, caractérisé en ce que les rouleaux sont solidaires d'un doigt coulissant le long d'une fente allongée d'une paroi du boîtier, en vue de leur écartement en opposition aux ressorts.

Revendications modifiées conformément à la règle 86(2) CBE.

1. Dispositif auto-bloquant destiné à être associé temporairement à un matériau de forme quelconque en vue de les solidariser l'un à l'autre sans endommager la surface dudit matériau, et avec une force proportionnelle au poids dudit matériau et/ou à toute action de traction exercée sur ledit matériau, du type dans lequel un cylindre rotatif pince ledit matériau contre une paroi par effet de coin, caractérisé en ce qu'il comprend:
- un boîtier présentant deux parois deux parois latérales divergeant vers le haut depuis un orifice inférieur d'insertion,
- au moins un cylindre presseur roulant le long de la première de ces parois,
- ledit cylindre presseur étant repoussé vers le bas par un premier élément élastique et vers ladite première paroi par un second élément élastique, l'insertion vers le haut dudit matériau dans ledit orifice d'insertion repoussant ledit cylindre presseur à la fois vers le haut en opposition au premier élément élastique et vers ladite première paroi en opposition au second élément élastique, en l'écartant de la seconde paroi du boîtier,
de sorte que toute action exercée sur ledit matériau vers le bas a pour effet de rappeler ledit cylindre presseur vers le bas et vers ladite seconde paroi, en exerçant ainsi sur ledit matériau une action de blocage entre ledit cylindre et ladite seconde paroi, par effet de coin, d'autant plus intense que ladite action de traction vers le bas est plus intense.

2. Dispositif selon la revendication 1, caractérisé en ce que ledit cylindre presseur est fixé à une tige de guidage, ladite tige de guidage constituant le second élément élastique, tandis que le premier élément élastique consiste en un ressort de compression enroulé autour de ladite tige.

3. Dispositif selon les revendications 1 à 2, caractérisé en ce que le dispositif comprend additionnellement des moyens pour exercer positivement sur ledit cylindre une action de traction vers le haut, de telle sorte qu'il soit écarté de ladite première paroi de manière à relâcher ladite action de blocage.

4. Dispositif selon les revendications 1 à 3, caractérisé en ce que le dispositif comprend un cylindre presseur unique et que les moyens de la revendication 3 consistent en un doigt transversal traversant une fente allongée pratiquée dans la première paroi.

5. Dispositif selon la revendication 4, caractérisé en ce que le boîtier est en deux parties destinées à être temporairement ouvertes et comportant un verrou les bloquant en position fermée.

6. Boucle d'oreille caractérisée en ce qu'elles comporte un dispositif auto-bloquant selon la revendication 5.

7. Pince et plus spécialement pince à linge, caractérisée en ce qu'elle comporte un dispositif auto-bloquant conforme à la revendication 4.

8. Dispositif selon les revendications 1 à 3, caractérisé en ce que le dispositif comprend deux cylindres presseurs, ledit second élément élastique consistant en une fourche élastique dont chaque branche est fixée à l'un desdits cylindres presseurs, ladite fourche présentant un angle de divergence plus grand que l'angle de divergence des parois latérales du boîtier.

9. Dispositif selon la revendication 8, caractérisé en ce qu'un élément fixé à la fourche est prévu de manière à être tiré élastiquement vers le haut, de manière telle que les cylindres roulant le long des parois latérales relâchent leur action de blocage.

10. Dispositif selon la revendication 9, caractérisé en ce qu'une cale est prévue de manière à maintenir ledit élément en position supérieure de manière telle que lesdits cylindres soient maintenus en permanence séparés de manière à ce que leur action de blocage soit dégagée.

Fig. 1

Fig:2

Fig. 3.

_Fig. 4_

EP 0 388 570 A1

M

24

27

22

25

23

26

29

28

21

30

Fig.5

Fig.6

Office européen
des brevets

**RAPPORT DE RECHERCHE EUROPEENNE**

Numero de la demande

EP 89 44 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-2 710 511 (A.W. BALDWIN) <br> * Colonne 2, ligne 3 - colonne 3, ligne 8; figures 1-6 * | 1,2,4,7 | F 16 B  2/16 |
| Y | | 5,9 | |
| X | FR-A-2 247 118 (M. GERIN) <br> * Page 2, ligne 25 - page 6, ligne 24; figures 1,2 * | 1,3,4 | |
| X | US-A-4 318 563 (DCA FOOD INDUSTRIES INC.) <br> * Résumé; figures 3,4,6 * | 1,2 | |
| Y | | 9 | |
| X | FR-A-2 610 678 (VEIT TRANSPO) <br> * Page 11, ligne 10 - page 17, ligne 1; figures 1-4 * | 1,2,4 | |
| A | | 5 | |

**DOMAINES TECHNIQUES RECHERCHES (Int. Cl.5)**

F 16 B
A 44 C

Le présent rapport a été établi pour toutes les revendications

| Lieu de la recherche | Date d'achèvement de la recherche | Examinateur |
|---|---|---|
| LA HAYE | 06-11-1989 | ARESO Y SALINAS J. |